Europäisches Patentamt

European Patent Office

Office européen des brevets

(11) Veröffentlichungsnummer: **0 444 578 A2**

## (12) EUROPÄISCHE PATENTANMELDUNG

(21) Anmeldenummer: 91102758.9

(51) Int. Cl.5: **G01N 29/28**

(22) Anmeldetag: 25.02.91

(30) Priorität: 26.02.90 DE 9002271 U

(43) Veröffentlichungstag der Anmeldung:
**04.09.91 Patentblatt 91/36**

(84) Benannte Vertragsstaaten:
**AT CH DE ES FR GB IT LI SE**

(71) Anmelder: **INTERATOM Gesellschaft mit beschränkter Haftung**
**Friedrich-Ebert-Strasse**
**W-5060 Bergisch-Gladbach 1(DE)**

(72) Erfinder: **Granner, Norbert**
**Reginharstrasse 22**
**W-5060 Bergisch Gladbach 1(DE)**
Erfinder: **Möller, Dirk, Dr.**
**Reginharstrasse 30**
**W-5060 Bergisch Gladbach 1(DE)**
Erfinder: **Gehr, Heinz-Ludwig**
**Beethovenstrasse 2**
**W-5253 Lindlar 1(DE)**
Erfinder: **Kayser, Werner**
**Schwalbenweg 42**
**W-5253 Lindlar 1(DE)**

(74) Vertreter: **Fuchs, Franz-Josef, Dr.-Ing. et al**
**Postfach 22 13 17**
**W-8000 München 22(DE)**

(54) **Ultraschall-Wasserstrahldüse.**

(57) Die vorliegende Erfindung betrifft eine Wasserstrahldüse zur Übertragung von Ultraschall-Prüfsignalen im Freistrahl auf ein zu prüfendes Bauteil mit einem Piezoelement (1) als Sender und/oder Empfänger, mit einem Anschluß (5) für Wasser, einem Strömungsgleichrichter (10) und einer Beschleunigungsstrecke (8), insbesondere für die Prüfung von Bauteilen, die komplex geformt und so groß sind, daß sie nicht in einem Wasserbad eingetaucht geprüft werden können, wie z. B. Flugzeugleitwerke. In dem Strömungsraum (16) bleibt das Schallnahfeld ungestört. Es werden Hinweise gegeben zur Lösung von strömungstechnischen und schalltechnischen Anforderungen.

FIG 2

EP 0 444 578 A2

Die vorliegende Erfindung betrifft eine Wasserstrahldüse zur Übertragung von Ultraschall-Prüfsignalen im Freistrahl auf ein zu prüfendes Bauteil, mit einem Piezolement als Sender und/oder Empfänger, mit einem Anschluß für Wasser und einer Beschleunigungsstrecke, insbesondere für die Prüfung von Bauteilen, die komplex geformt und so groß sind, daß sie nicht in einem Wasserbad eingetaucht geprüft werden können, wie z. B. Flugzeugleitwerke aus Kohlenstoffaserverbundmaterial.

Diese Prüftechnik, auch mit Squirter-Technik bezeichnet, ist in der Zeitschrift "Siemens Energie und Automation 8" (1986), Heft 3, auf den Seiten 193 bis 196 beschrieben. Die für diese Squirter-Technik benutzten Düsen haben in ihrer Mittelachse einen rotationssymmetrischen Ultraschall-Sende- und Empfangskopf und eine dazu koaxiale Düse. Sie sollen einen möglichst geringen Wasserverbrauch haben und müssen weitgehend drallfrei und verlustarm gestaltet sein, damit der Wasserstrahl möglichst weit reicht. Weiterhin sollen sie das Schallsignal mit möglichst wenig Dämpfung und Reflexionen auf den Wasserstrahl übertragen. Die Wasserzufuhr ist seitlich, oft radial angeordnet und erzeugt daher innerhalb der Düse einen Drall sowie Turbulenzen.

Um einen Drall zu vermeiden, sind in der Strömungstechnik sogenannte Strömungsgleichrichter bekannt mit zahlreichen, achsparallelen Wänden, die aber zwangsläufig das akustische Übertragungsverhalten stören, störende Reflexionen verursachen und daher für Squirter-Düsen bisher nicht verwendet wurden.

In der "Revue d'Acoustique" (1987), vol. 21, no. 82, wird auf den Seiten 53 bis 57 wird über ein Wasser-Squirter-System für die zerstörungsfreie Prüfung von Kompositmaterialien mit Ultraschall berichtet. Die Ausbreitung der akustischen Wellen wird nach einem zweidimensionalen Modell numerisch berechnet und mit Messungen verglichen. In den Skizzen ist erkennbar, wie die Schallwellen in einer langen, zunächst konischen und dann zylindrischen Düse mehrfach reflektiert und damit geschwächt werden.

Aufgabe der vorliegenden Erfindung ist die Verbesserung der bekannten Wasserstrahldüsen zur Übertragung von Ultraschall-Prüfsignalen im Freistrahl auf ein zu prüfendes Bauteil mit einem Piezoelement als Sender und/oder Empfänger, mit einem Anschluß für Wasser und einer Beschleunigungsstrecke. Diese Wasserstrahldüse soll ein Optimum aus strömungstechnischen und schalltechnischen Anforderungen darstellen.

Zur Lösung dieser Aufgabe wird erfindungsgemäß vorgeschlagen, daß die Wasserstrahldüse einen Strömungsgleichrichter hat und im Schallnahfeld des Piezoelementes einen Strömungsraum aufweist, der auf der Länge des Schallnahfeldes einen Durchmesser hat, der gleich oder größer ist als die Schallaustrittsfläche des Piezoelementes und die sich anschließende Beschleunigungsstrecke kürzer ist als der Strömungsraum, d. h. so kurz wie möglich. Damit wird ein weitgehend ungestörtes Schallnahfeld gewährleistet und es werden die oben erwähnten Reflexionen von Schallwellen an der Wand des Strömungsraumes in den austretenden Wasserstrahl hinein vermieden. Die Länge N des Schallnahfeldes wird nach den Definitionen der Deutschen Gesellschaft für Zerstörungsfreie Prüfung e.V., Berlin, definiert als

$$N = (D^2 - Lambda^2)/(4 \cdot Lambda),$$

wobei mit D der Durchmesser der Schallaustrittsfläche des Piezoelementes und mit Lambda die Wellenlänge, beides in Millimeter gemessen, gemeint ist.

Weiterhin wird erfindungsgemäß vorgeschlagen, daß die Beschleunigungsstrecke Verengungen mit stetigen Übergängen, z. B. in Form von Rotationshyperboloiden mit Hyperbeln dritter Ordnung, hat, weil diese Strömungsablösungen und Strahlkontraktionen vermeiden, die das Schallfeld negativ beeinflussen.

Weiterhin wird erfindungsgemäß vorgeschlagen, daß ein Strömungsgleichrichter vor dem Eintritt des Wassers in den Strömungsraum, d. h. vor der Umlenkung vorhanden ist. Dann kann man auf einen Strömungsgleichrichter im Schallnahfeld verzichten.

In spezieller Ausgestaltung der Erfindung wird erfindungsgemäß vorgeschlagen, daß die Umlenkung des seitlich eintretenden Wasserstromes zunächst dem austretenden Wasserstrahl entgegengerichtet und danach bis zum Strömungsraum mit stetiger Beschleunigung gestaltet ist. Auf diese Weise werden Turbulenzen abgebaut und Kavitationen vermieden, die störende Geräusche verursachen und die Ausscheidung von Gasblasen begünstigen können. Gasblasen wirken schalltechnisch als Dämpfung, was auf jeden Fall vermieden werden soll.

Alternativ zu den beiden vorhergehenden Absätzen wird erfindungsgemäß vorgeschlagen, daß der Strömungsraum vom Wassereintritt durch einen zylindrischen, porösen Ring als Strömungsgleichrichter getrennt ist. Solche Ringe sind beispielsweise aus Keramik oder Kunststoff herstellbar und vermeiden einen Drall oder Strömungsablösungen im Strömungsraum vor dem Piezoelement. Auch damit kann man auf einen Strömungsgleichrichter im Schallnahfeld verzichten.

Weiterhin wird erfindungsgemäß vorgeschlagen, daß ein Strömungsgleichrichter im Strömungsraum vorhanden ist aus einem dünnwandigen zentralen Ring mit radialen Stegen. Ein Strömungsgleichrichter im Schallnahfeld sollte möglichst dünnwandig und reflexionsarm ausgeführt sein. Er könnte aus Stahl oder aus Kunststoff bestehen, beispielsweise vom Typ Polycarbonat oder Polypropylen. Diese Kunststoffe haben schalltechnisch ähnliche Werte wie Wasser und vermindern Störungen des Schallsignals.

Die Figuren 1 bis 5 zeigen Ausführungsbeispiele der Erfindung, und werden näher erläutert. Dabei sind in allen Figuren gleiche Teile mit gleichen Ziffern bezeichnet. Einander entsprechende Teile unterschiedlicher Form sind mit gleichen Ziffern, aber mit unterschiedlichen Buchstaben bezeichnet.

Figur 1 zeigt eine Konstruktion mit einem dünnwandigen Strömungsgleichrichter außerhalb des Schallnahfeldes.

Figur 2 zeigt einen Schnitt durch Figur 1.

Figur 3 zeigt eine Anordnung, bei der anstelle der oben erwähnten Umlenkung und Strömungsgleichrichter ein zylindrischer, poröser Ring aus Keramik vorhanden ist. Auch dies erspart gleichrichtende Einbauten im Schallnahfeld.

Figur 4 zeigt einen Schnitt durch Figur 3.

Figur 5 zeigt die einfachste Ausführungsform, mit einem dünnwandigen Strömungsgleichrichter im Schallnahfeld.

Figur 6 zeigt einen Schnitt durch Figur 5.

In allen Figuren ist ein Piezoelement 1, das sowohl als Sender als auch als Empfänger für Ultraschallprüfsignale dienen kann, mit O-Ringen 2 in ein Gehäuse 3 eingesetzt und mit einer Verschraubung 4 festgehalten. Es enthält in üblicher Weise einen Schwinger, einen Dämpfungskörper und eine Vorlaufstrecke. Seitlich am Gehäuse 3 ist ein Anschluß 5 für Wasser vorgesehen, während koaxial ein Mittelstück 6, das mit einem O-Ring 7 abgedichtet ist, eingeschraubt ist. Am Austrittsende ist eine sogenannte Beschleunigungsstrecke 8 mit einem O-Ring 9 abgedichtet und eingeschraubt. Diese Beschleunigungsstrecke 8 soll möglichst kurz sein, weil lange Beschleunigungsstrecken eine erhebliche Schallsignalschwächung infolge Berühren des Schallkegels mit der Düsenwand verursachen. Daher hat diese Beschleunigungsstrecke zunächst eine Reduzierung mit ca. 15° Steigung und anschließend zwei stetige Übergänge zu einem am Ende stark verengten Austritt von schwach konischer Geometrie (3-6°). Der Austritt selbst ist scharfkantig ausgeführt. Für die Abrundungen der Übergänge lohnt es sich, nicht nur die in der Strömungstechnik üblichen Viertelkreise, sondern stetige Kurven, z. B. Rotationshyperboloide mit Hyperbeln dritter Ordnung, anzuwenden. Gehäuse 3, Mittelstück 6 und Beschleunigungsstrecke 8 sind aus Polymethylmetacrylat (PMMK), das eine gute Dämpfung für Schallwellen hat.

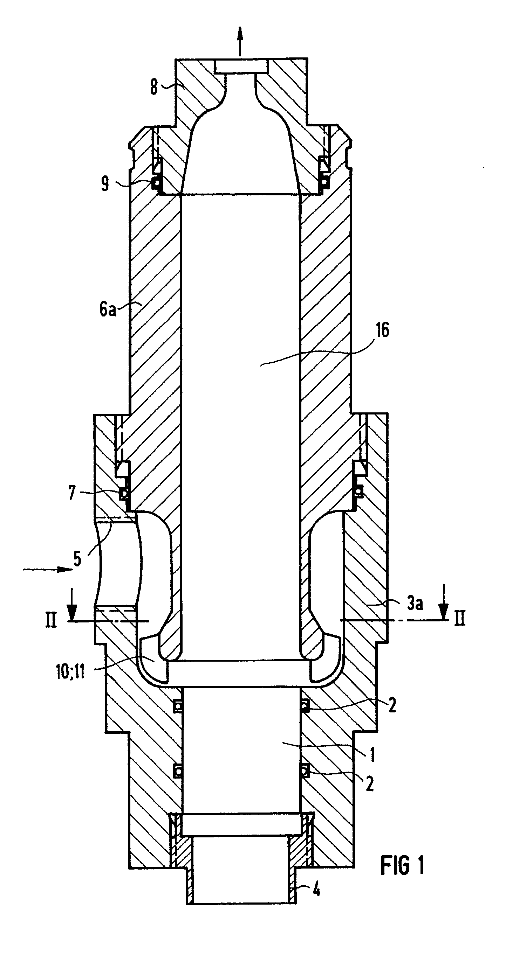

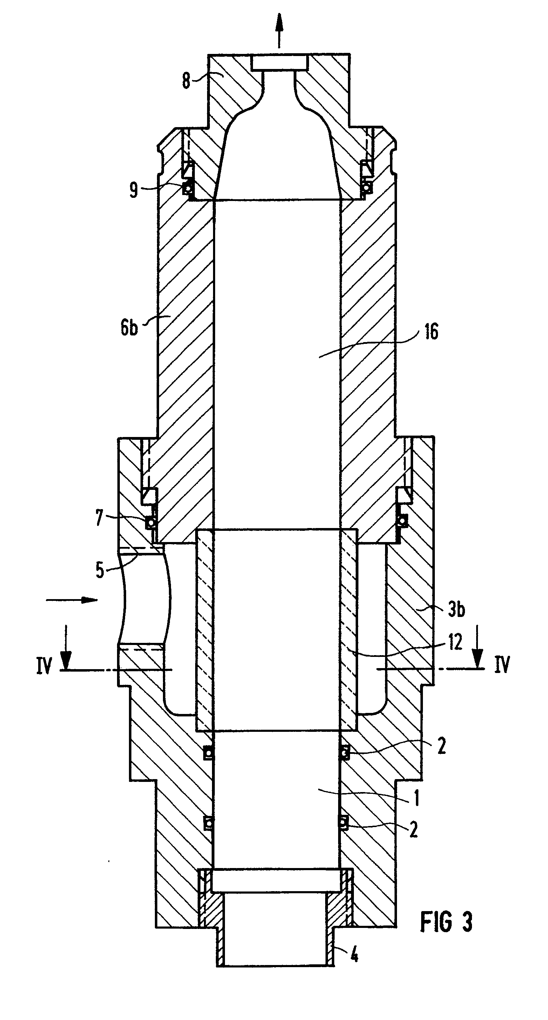

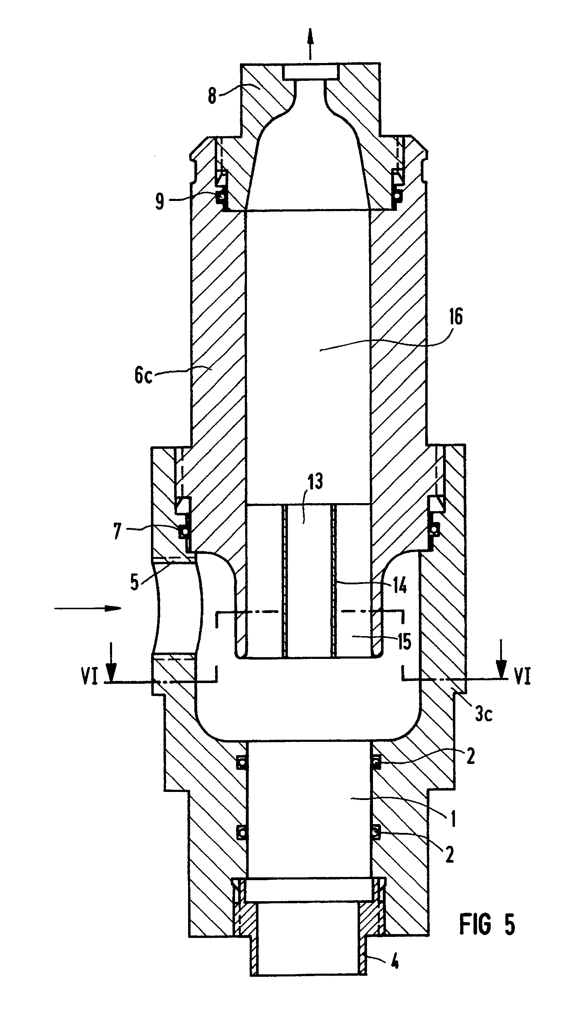

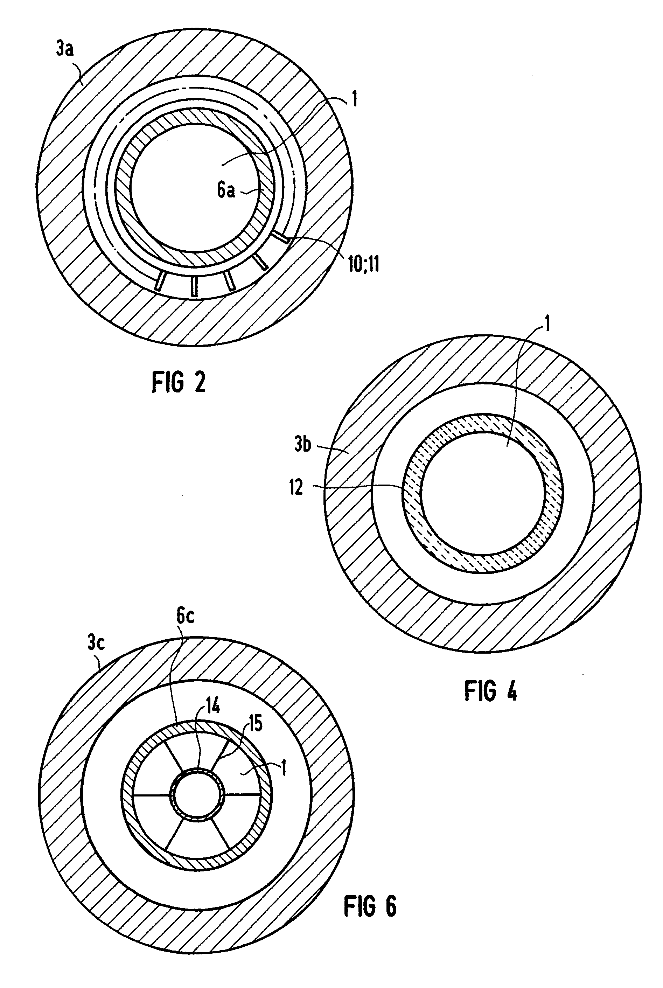

In den Figuren 1 und 2 trägt das Mittelstück 6a außerhalb des Schallnahfeldes einen Strömungsgleichrichter 10 mit zahlreichen achsparallelen Flächen 11. Man kann damit auf den Einbau eines Strömungsgleichrichters im Schallnahfeld verzichten. Die Flächen 11 müssen allerdings sehr sorgfältig achsparallel ausgerichtet sein, um einen anschließenden Drall zu vermeiden, daher ist die Herstellung sehr aufwendig.

In den Figur 3 und 4 trägt das Mittelstück 6b an seinem unteren Ende einen zylindrischen, porösen Ring 12 aus Keramik als Strömungsgleichrichter. Dieser Ring 12 ist strömungstechnisch nahezu ideal, wird aber bei längerem Gebrauch durch Verunreinigungen oder Verkalkungen aus dem Wasser einseitig in der Nähe des Anschlusses 5 verschmutzt und in seiner Durchflußleistung verändert. Daher sollte dieser Ring 12 auswechselbar gestaltet sein.

In den Figuren 5 und 6 trägt das Mittelstück 6c einen Strömungsgleichrichter 13 aus sehr dünnwandigen und exakt bearbeiteten parallelen Teilen aus Stahl mit einem zentralen Ring 14 und sechs radialen Stegen 15.

Die nicht näher dargestellte Verschraubung am Anschluß 5 sollte abgerundete Übergänge haben und einen so großen Durchmesser, daß an dieser Stelle keine schalltechnisch störenden Kavitationen oder Ablösungen auftreten können.

In allen Figuren wird der Raum vom Piezoelement 1 bis zur Beschleunigungsstrecke 8 als Strömungsraum 16 bezeichnet. Dieser hat einen Durchmesser, der gleich oder größer ist als die Schallaustrittsfläche des Piezoelementes 1. Der nach akustischen Parametern optimierte Strömungsraum 16 mit der anschließenden Beschleunigungsstrecke 8 erlaubt eine für die Ultraschallprüfung nutzbare Strahlweite der Squirter-Düse von bis zu 1,5 m.

Die erfindungsgemäßen Wasserstrahldüsen können sowohl für die Impuls-Echo-Technik mit einem einzigen Piezoelement als Sender und Empfänger nur auf einer Seite des zu prüfenden Bauteils als auch für die Durchschallung auf beiden Seiten des Bauteils einmal als Sender und einmal als Empfänger benutzt werden.

**Patentansprüche**

1. Wasserstrahldüse zur Übertragung von Ultraschall-Prüfsignalen im Freistrahl auf ein zu prüfendes Bauteil, mit einem Piezoelement (1) als Sender und/oder Empfänger, mit einem Anschluß (5) für Wasser und einer Beschleunigungsstrecke (8), **dadurch gekennzeichnet,** daß die Wasserstrahldüse einen Strömungsgleichrichter (10, 12 oder 13) hat und im Schallnahfeld des Piezoelementes (1) einen Strömungsraum (16) aufweist, der auf der Länge des Schallnahfeldes einen Durchmesser hat, der gleich oder größer ist als die Schallaustrittsfläche des Piezoelementes (1), und die sich anschließende Beschleunigungsstrecke (8) kürzer ist als der Strömungsraum (16).

2. Wasserstrahldüse nach Anspruch 1, **dadurch gekennzeichnet,** daß die Beschleunigungsstrecke (8) Verengungen mit stetigen Übergängen hat.

3. Wasserstrahldüse nach den Ansprüchen 1 oder 2, **dadurch gekennzeichnet,** daß ein Strömungsgleichrichter (10) vor dem Eintritt des Wassers in den Strömungsraum (16) vorhanden ist.

4. Wasserstrahldüse nach Anspruch 3, **dadurch gekennzeichnet,** daß die Umlenkung des durch den Anschluß (5) seitlich eintretenden Wassers zunächst dem austretenden Wasserstrahl entgegengerichtet und danach bis zum Strömungsraum (16) mit stetiger Beschleunigung ausgestaltet ist.

5. Wasserstrahldüse nach Anspruch 3, **dadurch gekennzeichnet,** daß der Strömungsraum (16) vom eintretenden Wasser durch einen zylindrischen, porösen Ring (12) als Strömungsgleichrichter getrennt ist.

6. Wasserstrahldüse nach Anspruch 1, **dadurch gekennzeichnet,** daß im Strömungsraum (16) ein Strömungsgleichrichter (13) aus einem dünnwandigen zentralen Ring (14) mit radialen Stegen (15) vorhanden ist.

FIG 1

FIG 3

FIG 5

FIG 2

FIG 4

FIG 6